# EUROPÄISCHE PATENTSCHRIFT

(11) **EP 0 618 549 B1**
(45) Veröffentlichungstag und Bekanntmachung des Hinweises auf die Patenterteilung: **16.06.1999**
(21) Anmeldenummer: 93104948.0
(22) Anmeldetag: 25.03.1993
(51) Int. Cl.: G07C 3/00, G06F 11/22

(54) **Überwachung von einer speicherprogrammierbaren Steuerung**
Monitoring of a programmable controller
Surveillance d'un automate programmable

(43) Veröffentlichungstag der Anmeldung: 05.10.1994
(73) Patentinhaber: SIEMENS AKTIENGESELLSCHAFT, 80333 München (DE)
(72) Erfinder: Becker, Norbert, Dipl.-Ing., W-8520 Erlangen (DE); Diehm, Gerhard, Dipl.-Infor. (FH), W-7500 Karlsruhe 21 (DE); Gentner, Jürgen, Dr. Ing., W-7500 Karlsruhe (DE); Krämer, Manfred, Dipl.-Ing. (FH), W-8508 Wendelstein (DE); Trummer, Georg, Dipl.-Ing. (FH), W-8450 Amberg (DE); Windl, Helmut, Dipl.-Ing. (FH), W-8403 Bad Abbach (DE)

(56) Entgegenhaltungen:
- EP-A- 0 104 886
- EP-A- 0 113 232
- EP-A- 0 142 013
- EP-A- 0 478 461
- CH-A- 679 811
- DE-A- 4 040 927
- FR-A- 2 566 561
- FR-A- 2 574 928

## Beschreibung

Die vorliegende Erfindung betrifft die Überwachung einer speicherprogrammierbaren Steuerung.

Überwachungsverfahren sind für speicherprogrammierbare Steuerungen allgemein bekannt. Ein Beispiel einer derartigen Steuerung ist die SIMATIC S5-115 U der Siemens AG.

Ferner ist aus der EP-A-0 104 886 ein Überwachungsverfahren für ein elektrisches Gerät, insbesondere eine elektrische Steuerung für ein Kopiergerät, bekannt, wobei durch das Überwachungsverfahren wichtige geräteinterne Ereignisse, insbesondere Fehlermeldungen, beim Auftreten erfaßt und als Meldungen in chronologischer Reihenfolge in einem Meldungsspeicherbereich abgelegt werden. Die Meldungen werden vor dem Ablegen aufbereitet, insbesondere mit der Zeit und dem Ort des Auftretens des geräteinternen Ereignisses versehen.

Auch aus der DE-A-4 040 927 ist eine Steuerung bekannt, bei der Fehlermeldungen in chronologischer Reihenfolge in einem Meldungsspeicherbereich hinterlegt werden.

Bei den bekannten Überwachungsverfahren für speicherprogrammierbare Steuerungen wird das Auftreten von wichtigen Betriebssystemereignissen, z. B. einem Quittungsverzug bei einem Peripheriezugriff, lediglich in eine Fehlerliste eingetragen sowie eine Fehlerbehandlungsroutine aufgerufen. Ist in der Fehlerbehandlungsroutine die Behandlung dieses Fehlers vorgesehen, so wird der Listeneintrag wieder gelöscht und der Fehler behandelt. Andernfalls geht die speicherprogrammierbare Steuerung in den Stopp-Zustand.

Dem Anwender bzw. dem Programmierer steht daher nur die minimale Information zur Verfügung, was das Stoppen der speicherprogrammierbaren Steuerung verursacht hat.

Insbesondere bei der Programmentwicklung - ist diese Information bei weitem unzureichend. Der vorliegende Erfindung liegt daher die Aufgabe zugrunde, ein Überwachungsverfahren für eine speicherprogrammierbare Steuerung zur Verfügung zu stellen, das dem Programmierer bzw. dem Anwender mehr Informationen über die Vorgänge in der Steuerung zur Verfügung stellt.

Die Aufgabe wird durch ein Überwachungsverfahren für eine speicherprogrammierbare Steuerung gelöst, das wichtige Steuerungsinterne Ereignisse, insbesondere aber nicht nur Fehlermeldungen, beim Auftreten erfaßt und als Meldungen in chronologischer Reihenfolge in einem Meldungsspeicherbereich ablegt, wobei bei vollständig belegtem Meldungsspeicherbereich die älteste Meldung überschrieben wird.

Ferner betrifft die Erfindung eine speicherprogrammierbare Steuerung mit Mitteln zur Durchführung dieses Verfahrens.

Dadurch wird dem Programmierer bzw. dem Anwender zusätzlich zur Fehlerursache selbst auch die Vorgeschichte dieses Fehlers mitgeliefert, so daß eine erheblich leichtere Fehlersuche möglich ist. Die Programmerstellung wird dadurch erheblich komfortabler und auch erheblich schneller. Durch die Reduzierung der Inbetriebssetzungszeiten wird daher die Verfügbarkeit des elektrischen Geräts bzw. der Steuerung erhöht.

Darüber hinaus kann in Grenzen durch das erfindungsgemäße Überwachungsverfahren auch der Normalbetrieb dokumentiert werden. Besonders wichtig kann dies bei einer Steuerung für eine technische Anlage bzw. einen technischen Prozeß sein, wenn es darum geht, Unfallursachen zu ermitteln.

Wenn die Meldungen vor dem Ablegen aufbereitet werden, z. B. mit der Zeit und dem Ort des Auftretens des wichtigen geräteinternen Ereignisses versehen werden, ist der Inhalt des Meldungsspeicherbereichs für den Anwender besonders leicht interpretierbar.

Wenn die wichtigen geräteinternen Ereignisse auch Alarme bzw. Interrupts und Ablaufebenenwechsel umfassen, so enthält der Meldungsspeicherbereich noch detailliertere Informationen über das dynamische Verhalten des elektrischen Geräts.

Weitere Vorteile und Einzelheiten ergeben sich aus der nachfolgenden Beschreibung eines Ausführungsbeispiels, anhand der Zeichnung und in Verbindung mit den weiteren Ansprüchen. Dabei zeigen:
- FIG 1: ein Blockschaltbild einer modular aufgebauten speicherprogrammierbaren Steuerung und
- FIG 2: ein Blockschaltbild der Zentraleinheit der speicherprogrammierbaren Steuerung.

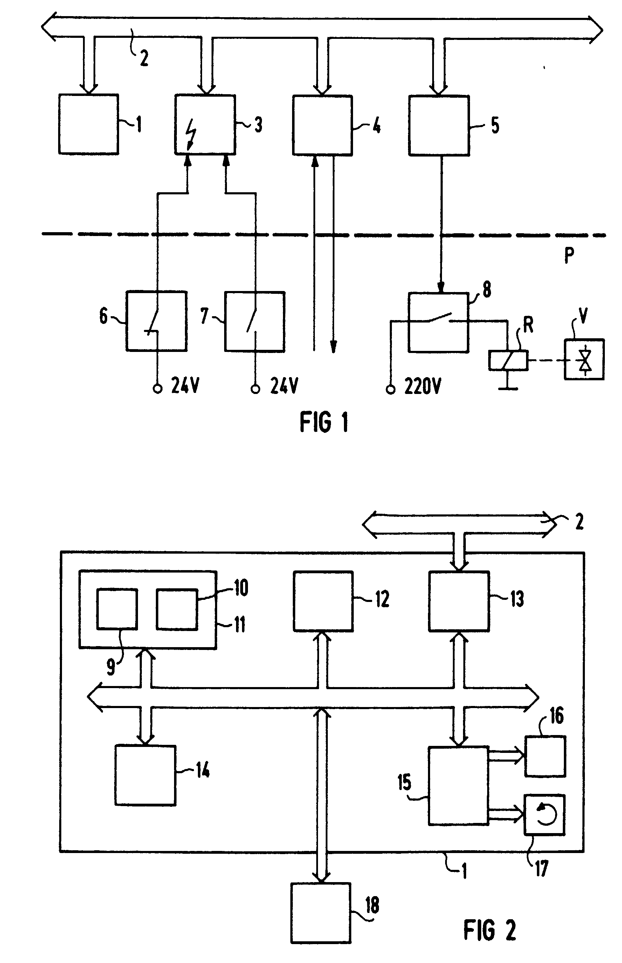

FIG 1 zeigt eine speicherprogrammierbare Steuerung, die eine Zentraleinheit 1 aufweist, die über den Bus 2 mit den Baugruppen 3, 4, 5 verbunden ist. Die Baugruppe 3 ist eine Eingabebaugruppe, die Baugruppe 4 eine intelligente Peripheriebaugruppe und die Baugruppe 5 eine Ausgabebaugruppe. Die Baugruppen 3 bis 5 sind gemäß FIG 1 zur Steuerung, Überwachung und Führung des Prozesses P mit Signalgebern und Stellgliedern verbunden.

Der Prozeß P kann ein beliebiger technischer Prozeß sein, z. B. eine hydraulische Presse. Der Schalter 6 ist beispielsweise ein Nothalt-Schalter, während der Schalter 7 der Bedienungsschalter zum Schließen der Presse ist. Die Anforderung eines Nothalts muß selbstverständlich sofort befolgt werden. Daher ist der Nothalt-Schalter 6 mit einem Alarmeingang der Baugruppe 3 verbunden, wie in FIG 1 durch das Blitzzeichen angedeutet ist. Die Anforderung eines Nothalts über den Schalter 6 veranlaßt die Baugruppe 3, einen Alarm über den Bus 2 an die Zentraleinheit 1 zu senden, so daß die Zentraleinheit 1 über den Bus 2 und die Ausgabebaugruppe 5 den Schalter 8 öffnet. Durch das Öffnen des Schalters 8 fällt das Relais R ab, und das Ventil V wird geschlossen, so daß die Presse nicht weiter geschlossen wird.

Die intelligente Peripheriebaugruppe 4 ist im Regelfall eine Baugruppe, die einen Teilprozeß selbständig steuert und regelt, z. B. eine Temperaturregelungsbaugruppe.

Die Wirkungsweise der SPS wird durch das Anwenderprogramm 9 bestimmt, das zusammen mit dem Betriebssystem 10 im Speicher 11 abgelegt ist und vom Prozessor 12 abgearbeitet wird. Aufgrund der Befehle des Anwenderprogramms 9 liest der Prozessor 12 über den Controller 13 Daten vom Bus 2 ein bzw. gibt über den Controller 13 Daten an den Bus 2 aus. Sowohl die ankommenden als auch die ausgehenden Daten werden dabei im Datenspeicher 14 zwischengespeichert.

Im Normalbetrieb wird die Diagnoseeinheit 15 nicht angesprochen. Sie bleibt daher deaktiviert. Wichtige Betriebssystemereignisse dagegen werden an die Diagnoseeinheit 15 weitergemeldet, und zwar mit allen verfügbaren und relevanten Informationen, z. B. dem Ort ihres Auftretens und der Art des Betriebssystemereignisses. Die Diagnoseeinheit 15 aktualisiert darauf, soweit nötig, die Systemzustandsliste 16 und legt eine Meldung über das wichtige Betriebssystemereignis im Meldungsspeicher 17 ab. Die Meldung wird dabei vor dem Ablegen aufbereitet, d.h. es wird nicht nur die Meldung selbst im Meldungsspeicher 17 abgelegt, sondern auch die Zeit des Auftretens des wichtigen Betriebssystemsereignisses, der Ort des Auftretens des wichtigen Betriebssystemsereignisses sowie ggf. weitere Informationen, z. B. über Randbedingungen.

Die genaue Vorgehensweise wird im folgenden anhand eines beispielhaften Betriebssystemereignisses, nämlich eines Zugriffehlers auf eine der Peripheriebaugruppen, näher erlautert.

Es sei angenommen, daß die Zentraleinheit 1 versucht hat, die Peripheriebaugruppe 4 anzusprechen und nach einer bestimmten Wartezeit keine Antwort erhalten hat. Der Prozessor 12 sendet daraufhin an die Diagnoseeinheit 15 die Meldung "Zugriffsfehler bei Zugriff auf zweite Peripheriebaugruppe", Die Diagnoseeinheit 15 empfängt diese Fehlermeldung. Sodann aktualisiert sie die Systemzustandsliste 16, d.h. sie trägt die Fehlermeldung in die Systemzustandsliste 16 ein. Weiterhin vermerkt die Diagnoseeinheit 15 die Uhrzeit, zu der ihr die Fehlermeldung übermittelt wurde, und legt die Fehlermeldung "Zugriffsfehler" in Form einer Fehlernummer zusammen mit der Ortsinformation "Baugruppe 2" und der Zeit des Auftretens im Meldungsspeicher 17 ab.

Sodann prüft die Diagnoseeinheit 15, ob sie den aufgetretenen Fehler behandeln und evtl. korrigieren kann. Wenn ja, behandelt die Diagnoseeinheit 15 den Fehler, teilt das Ergebnis der Fehlerbehandlung dem Prozessor 12 mit und löscht den Fehlereintrag in der Systemzustandsliste 16 wieder. Weiterhin trägt die Diagnoseeinheit 15 eine Meldung "Zugriffsfehler behandelt" zusammen mit den Informationen "Baugruppe 2" und der Zeit der Behandlung als neue Meldung nach der ersten Meldung in den Meldungsspeicher 17 ein. Wenn die Fehlerbehandlung dagegen nicht vorgesehen ist, so meldet dies die Diagnoseeinheit 15 an den Prozessor 12, der daraufhin die weitere Bearbeitung des Programms abbricht.

Beim Auftreten eines neuen Fehlers oder anderer Ereignisse, z. B. eines Prozeßalarms bzw. eines Interrupts oder eines Ablaufebenenwechsels, eines Hardware- oder eines Rechenfehlers, erfolgen ebenfalls Einträge in den Meldungsspeicher 17. Im Meldungsspeicher 17 entsteht also ein Bild über die chronologische Reihenfolge der wichtigen Betriebssystemereignisse. Im Gegensatz dazu spiegelt die Systemzustandsliste 16 stets nur den momentanen Systemzustand (ohne Vorgeschichte) wider.

Auch durch das Anwenderprogramm 9 können Bedingungen abgefragt werden und bei Vorliegen dieser Bedingungen entsprechende Meldungen in dem Meldungsspeicherbereich 17 abgelegt werden. Tritt beispielsweise zyklisch ein Peripheriezugriffsfehler auf, so wird der Meldungsspeicher 17 mit Zugriffsfehlereinträgen gefüllt. Bricht der Prozessor 12 später aus anderen Gründen die Programmabarbeitung ab, so enthält der Eintrag in der Systemzustandsliste 16 die Stopp-Ursache und die Meldungen im Meldungsspeicher 17 die Vorgeschichte dazu.

Der Meldungsspeicher 17 hat nur ein beschränktes Fassungsvermögen. Der Meldungsspeicher 17 ist daher als Ring- bzw. Umlaufpuffer ausgebildet. Wenn der Meldungsspeicher 17 vollständig belegt und eine weitere Meldung im Meldungsspeicher 17 abgelegt werden soll, wird daher die älteste Meldung mit dieser weiteren Meldung überschrieben.

Der Meldungsspeicher 17 ist als nichtflüchtiger Speicher ausgebildet, z. B. als EEPROM oder als gepuffertes RAM. Dadurch bleibt der Inhalt des Meldungsspeichers 17 auch bei einem Netzausfall erhalten. Darüber hinaus kann der Anwender den Meldungsspeicher 17 zwar auslesen, z. B. in ein Programmiergerät 18, aber nicht löschen. Der Anwender kann daher den Inhalt des Meldungsspeichers 17 nicht manipulieren. Weiterhin ist das Ablegen der Meldungen im Meldungsspeicher 17 ununterdrückbar. Bei Unfällen sind daher im Meldungsspeicher 17 die letzten Meldungen vor dem Unfall dokumentiert. Ein etwaiges Fehlverhalten der Steuerung oder des Anwenders oder auch andere Fehlerursachen lassen sich so erheblich leichter ermitteln.

Auch bei der Programmentwicklung- und Korrektur ist das Vorhandensein der Vorgeschichte eines Systemhalts von großer Bedeutung. Er kann die Fehlersuche enorm vereinfachen, insbesondere deshalb, weil auch das Zusammenwirken zwischen Betriebssystem 10 und Anwenderprogramm 9 im Meldungsspeicher 17 dokumentierbar ist.

Der Inhalt des Meldungsspeichers 17 kann, wie bereits erwähnt, in ein Programmiergerät 18 ausgelesen werden. Der Anwender bzw. das Wartungspersonal haben damit die Möglichkeit, bei einem Stoppen der Programmbearbeitung die letzten Ereignisse vor dem Stoppen zurückzuverfolgen und so die Stopp-Ursache zu erkennen.

Das Auslesen des Meldungsspeichers 17 ist aber auch im laufenden Betrieb möglich. In diesem Fall erhält man Informationen über das dynamische Verhalten der Steuerung und evtl. auch des Prozesses P. Eine Optimierung des Steuerungsprogrammes bzw. des Prozesses wird dadurch erheblich erleichtert.

Die Meldungen werden aus dem Meldungsspeicher 17 dadurch ausgelesen, daß das Programmiergerät 18 an die Zentraleinheit 1 die Anforderung übermittelt, ihr die letzten n Meldungen mitzuteilen. Die Diagnoseeinheit 15 sendet daraufhin zuerst die letzte Meldung, dann die vorletzte Meldung usw. an das Programmiergerät 18.

Während des Auslesens des Meldungsspeichers 17 können aber auch neue Meldungen in den Meldungsspeicher 17 eingetragen werden. Dabei kann es vorkommen, daß eine an das Programmiergerät 18 auszugebende Meldung überschrieben wird, noch bevor sie an das Programmiergerät 18 übertragen worden ist. Ein derartiges Überschreiben ist vom Anwender erkennbar, da die Zeit der Meldung des Ereignisses mit in der Meldung abgelegt ist.

Abschließend sei noch erwähnt, daß die Diagnoseeinheit 15 selbstverständlich auch als Softwarebaustein realisiert sein kann.

## Patentansprüche

1. Überwachungsverfahren für eine speicherprogrammierbare Steuerung, wobei durch das Überwachungsverfahren wichtige steuerungsinterne Ereignisse, insbesondere aber nicht nur Fehlermeldungen, beim Auftreten erfaßt und als Meldungen in chronologischer Reihenfolge in einem Meldungsspeicherbereich (17) abgelegt werden, wobei bei vollständig belegtem Meldungsspeicherbereich (17) die älteste Meldung überschrieben wird.

2. Überwachungsverfahren nach Anspruch 1, **dadurch-gekennzeichnet**, daß die Meldungen vor dem Ablegen aufbereitet werden, z. B. mit der Zeit und dem Ort des Auftretens des wichtigen steuerungsinternen Ereignisses versehen werden.

3. Überwachungsverfahren nach Anspruch 1 oder 2, **dadurch gekennzeichnet**, daß die wichtigen steuerungsinternen Ereignisse auch Alarme bzw. Interrupts und Ablaufebenenwechsel umfassen.

4. Überwachungsverfahren nach Anspruch 1, 2 oder 3, **dadurch gekennzeichnet,** daß die speicherprogrammierbare Steuerung durch ein Anwenderprogramm (9) und ein Betriebssystem (10) gesteuert wird und daß die wichtigen steuerungsinternen Ereignisse Betriebssystemereignisse und/oder durch das Anwenderprogramm (9) bestimmte Ereignisse umfassen.

5. Überwachungsverfahren nach einem der obigen Ansprüche, **dadurch gekennzeichnet,** daß das Ablegen neuer Meldungen in den Meldungsspeicherbereich (17) auch während des Auslesens älterer Meldungen aus dem Meldungsspeicherbereich (17) erfolgt.

6. Überwachungsverfahren nach einem der obigen Ansprüche, **dadurch gekennzeichnet,** daß das Ablegen der Meldungen ununterdrückbar ist.

7. Speicherprogrammierbare Steuerung, mit Mitteln zum Speichern von Meldungen über die chronologische Reihenfolge von wichtigen steuerungsinternen Ereignissen, insbesondere aber nicht nur Fehlermeldungen, in einem Meldungsspeicherbereich (17), der als Ring- bzw. Umlaufpuffer ausgebildet ist.

8. Speicherprogrammierbare Steuerung nach Anspruch 7, **dadurch gekennzeichnet,** daß der Meldungsspeicherbereich (17) als nichtflüchtiger Speicher, z.B. als EEPROM, ausgebildet ist.

9. Speicherprogrammierbare Steuerung nach Anspruch 7 oder 8, **dadurch gekennzeichnet,** daß der Meldungsspeicherbereich (17) als vom Anwender unlöschbarer Speicher ausgebildet ist.

10. Speicherprogrammierbare Steuerung nach Anspruch 7, 8 oder 9, **dadurch gekennzeichnet,** daß es einen Programmspeicherbereich (11) zum Abspeichern eines Betriebssystems (10) und eines Anwenderprogramms (9) für die speicherprogrammierbare Steuerung aufweist.

## Claims

1. Monitoring method for a programmable control system, wherein important events internal to the control system, but in particular not only error messages, are detected by the monitoring method when they occur and filed as messages in chronological order in a message storage area (17), the oldest message being overwritten when the message storage area (17) is fully occupied.

2. Monitoring method according to claim 1, **characterised in that** the messages are edited, in particular are provided with the time and location of occurrence of the important event internal to the control system, before being filed.

3. Monitoring method according to claim 1 or 2,
**characterised in that** the important events internal to the control system also include alarms or interrupts and changes in operating sequence levels.

4. Monitoring method according to claim 1, 2 or 3, **characterised in that** the programmable control system is controlled by an application program (9) and an operating system (10) and that the important events internal to the control system include operating system events and/or events determined by the application program (9).

5. Monitoring method according to one of the above claims, **characterised in that** the filing of new messages in the message storage area (17) also takes place during the reading-out of earlier messages from the said message storage area (17).

6. Monitoring method according to one of the above claims, **characterised in that** the filing of the messages cannot be suppressed.

7. Programmable control system with means for storing messages about the chronological order of important events internal to the control system, but in particular not only error messages, in a message storage area (17) which is constructed as a ring or cyclical buffer.

8. Programmable control system according to claim 7, **characterised in that** the message storage area 17) is constructed as a non-volatile storage device, for example as an EEPROM.

9. Programmable control system according to claim 7 or 8, **characterised in that** the message storage area (17) is constructed as a storage device which cannot be erased by the user.

10. Programmable control system according to claim 7, 8 or 9, **characterised in that** it has a program storage area (11) for storing an operating system (10) and an application program (9) for the programmable control system.

## Revendications

1. Procédé de surveillance pour un automate programmable, des événements importants internes à l'automate, notamment mais non pas seulement des messages d'erreurs, étant détectés lorsqu'ils se produisent par le procédé de surveillance et mis en mémoire comme messages dans leur succession chronologique dans une zone (17) de mémoire de messages, un nouveau message étant écrit sur le message le plus ancien lorsque la zone (17) de mémoire de messages est entièrement occupée.

2. Procédé de surveillance suivant la revendication 1, caractérisé en ce que les messages sont préparés avant la mise en mémoire, par exemple munis de la date et du lieu de l'apparition de l'événement important interne à l'automate.

3. Procédé de surveillance suivant la revendication 1 ou 2, caractérisé en ce que les événements importants internes à l'automate comprennent aussi des alertes ou des interruptions et des changements de niveau de déroulement.

4. Procédé de surveillance suivant la revendication 1, 2 ou 3, caractérisé en ce que l'automate programmable est commandé par un programme (9) d'application et un système (10) d'exploitation et en ce que les événements importants internes à l'automate comprennent des événements du système d'exploitation et/ou des événements déterminés par le programme (9) d'application.

5. Procédé de surveillance suivant l'une des revendications précédentes, caractérisé en ce que la mise en mémoire de nouveaux messages dans la zone (17) de mémoire de messages s'effectue aussi pendant la lecture de messages plus anciens dans la zone (17) de mémoire de messages.

6. Procédé de surveillance suivant l'une des revendications précédentes, caractérisé en ce que la mise en mémoire des messages ne peut pas être supprimée.

7. Automate programmable, comportant des moyens pour mémoriser des messages concernant la succession chronologique d'événements importants internes à l'automate, notamment mais non pas seulement des messages d'erreurs, dans une zone (17) de mémoire de messages qui est réalisée en tampon en anneau ou en tampon tournant.

8. Automate programmable suivant la revendication 7, caractérisé en ce que la zone (17) de mémoire de messages est réalisée en mémoire non volatile, par exemple en EEPROM.

9. Automate programmable suivant la revendication 7 ou 8, caractérisé en ce que la zone (17) de mémoire de messages est réalisée en mémoire qui ne peut pas être effacée par l'utilisateur.

10. Automate programmable suivant la revendication 7, 8 ou 9, caractérisé en ce qu'elle comporte une zone (11) de mémoire de programme pour mémoriser un système (10) d'exploitation et un programme (9) d'application pour l'automate programmable.
